# EUROPÄISCHE PATENTSCHRIFT

(11) **EP 1 508 240 B1**
(45) Veröffentlichungstag und Bekanntmachung des Hinweises auf die Patenterteilung: **09.05.2012**
(21) Anmeldenummer: 03729882.5
(22) Anmeldetag: 09.05.2003
(51) Int. Cl.: H04M 3/42

(54) **VERFAHREN ZUR UNTERSTÜTZUNG EINER KOMMUNIKATIONSSYSTEMWEITEN MOBILITÄT EINES TEILNEHMERS**
METHOD FOR SUPPORTING THE MOBILITY OF A SUBSCRIBER ACROSS A COMMUNICATION SYSTEM
PROCEDE DE SUPPORT D'UNE MOBILITE D'UN ABONNE A TRAVERS UN SYSTEME DE COMMUNICATION

(30) Priorität: 29.05.2002 DE 10223979
(43) Veröffentlichungstag der Anmeldung: 23.02.2005
(73) Patentinhaber: Siemens Enterprise Communications GmbH & Co. KG, 81379 München (DE)
(72) Erfinder: BLICKBERNDT, Dirk, 41516 Grevenbroich (DE); SCHAADE, Stephan, 86807 Buchlö (DE); WILLE, Klaus, 81679 München (DE)
(74) Vertreter: Fritzsche, Thomas
(86) Internationale Anmeldenummer: PCT/DE2003/001499
(87) Internationale Veröffentlichungsnummer: WO 2003/103260

(56) Entgegenhaltungen:
- WO-A-99/23807
- US-A- 5 905 776

## Beschreibung

Die Erfindung betrifft ein Verfahren, das einem Teilnehmer innerhalb eines Kommunikationssystems ermöglicht, von einem ihm zugeordneten Kommunikationsendgerät auf ein anderes unter Beibehaltung benutzerspezifischer Konfigurationen zu wechseln.

Zeitgemäße Kommunikationssysteme ermöglichen einem Teilnehmer, bei einem temporären Wechsel des Aufenthaltsorts ein am neuen Aufenthaltsort vorliegendes, "besuchtes" Kommunikationsendgerät als das seinige zu individualisieren. Unter einer derartigen Individualisierung ist zu verstehen, dass der Teilnehmer am besuchten Kommunikationsendgerät über seine bisherigen Benutzereinstellungen, wie z.B. benutzerindividuelle Leistungsmerkmalaktivierungen oder Einstellungen seiner Benutzeroberfläche verfügen kann, ohne diese Einstellungen am neuen Kommunikationsendgerät eigenständig vornehmen zu müssen.

Um eine derartige Individualisierung zu veranlassen, registriert sich der Teilnehmer am besuchten Kommunikationsendgerät durch Eingabe einer ihm zugeordneten Benutzernummer - beispielsweise seiner Teilnehmernummer - und einer persönlichen Identifikationsnummer (PIN). Statt einer Eingabe von Benutzernummer und PIN Eingabe ist auch eine Registrierung mittels einer Chipkarte gebräuchlich.

Das zugehörige Leistungsmerkmal zur Unterstützung dieses temporären oder auch langfristigen Wechsels wird in Fachkreisen auch "Mobiler Teilnehmer" genannt. Im folgenden wird mit dem Begriff "Mobiler Teilnehmer" auch auf den dieses Leistungsmerkmal nutzenden Teilnehmer Bezug genommen.

In modernen Kommunikationssystemen wird verstärkt dazu übergegangen, kontinuierliche Datenströme, z.B. zur Sprach- oder Videokommunikation sowie Daten zur Steuerung und Kontrolle von Kommunikationsverbindungen über paketorientierte Netzwerke zu übermitteln. Auf dieser Technik basiert beispielsweise die so genannte Internettelephonie, die häufig auch als "Voice over Internet Protocol" (VoIP) bezeichnet wird. Zu den paketorientierten Netzwerken zählen bekanntermaßen LANs (Local Area Network), MANs (Metropolitan Area Network), WANs (Wide Area Network) oder auch das so genannte Internet, das einen weltweiten Zugriff auf paketorientiert übertragene Daten ermöglicht.

Im Bereich der Telekommunikation sind zunehmend Kommunikationseinrichtungen bekannt, die neben gebräuchlichen - auf einem leitungsvermittelnden Prinzip basierenden - Kommunikationsverbindungen auch eine Unterstützung des VoIP-Verfahrens und eine Anbindung geeignet ausgestalteter Kommunikationsendgeräte, so genannten VoIP-Kommunikationsendgeräten, ermöglichen.

Im Unterschied zu dezentralen Kommunikationssystemen auf Basis so genannter Peer-to-Peer-Konfigurationen, bei denen sowohl die Kommunikationssteuerung als auch die Vermittlungssteuerung zwischen den Kommunikationsendgeräten ohne eine zentrale Kommunikationseinrichtung erfolgt, übernehmen die oben genannten, um eine VoIP-Funktionalität erweiterten Kommunikationseinrichtungen auch bei VoIP-Kommunikationsendgeräten eine zentrale Steuerungsfunktion bezüglich der Vermittlung von Kommunikationsverbindungen.

Zu diesem Zweck ist jedes VoIP-Kommunikationsendgerät an seiner zugeordneten Kommunikationseinrichtung mit zugehörigen Teilnehmerdaten wie z.B. der Teilnehmernummer, Berechtigungen des Teilnehmers usw. registriert. Jedes VoIP-Kommunikationsendgerät ist also über das paketorientierte Netzwerk einer ihm zugehörigen, gleichfalls an das paketorientierte Netzwerk angebundenen Kommunikationseinrichtung zugeordnet. Das paketorientierte Netzwerk umspannt im allgemeinen das gesamte Kommunikationssystem, d.h. an jedem Punkt des Kommunikationssystems ist ein Zugang zum paketorientierten Netzwerk möglich. An jedem möglichen Zugang ist wiederum jeder mögliche Kommunikationspartner erreichbar.

Die Individualisierung eines besuchten Kommunikationsendgeräts durch einen mobilen Teilnehmer an einem Kommunikationsendgerät seiner Wahl ist auch in einem aus einem Verbund mehrerer Kommunikationseinrichtungen bestehenden Kommunikationssystem bekannt. In einem derartigen Verbund ist einem jeweiligen Teilnehmer häufig eine Kommunikationseinrichtung als so genannter Heimatnetzknoten zugeordnet. Am Heimatnetzknoten sind benutzerindividuelle Konfigurationsdaten eines Teilnehmers wie z.B. dessen Teilnehmernummer, seine Berechtigungsinformationen, Leistungsmerkmalaktivierungen usw. gespeichert.

Aus der deutschen Offenlegungsschrift DE 199 46 976 A1 ist beispielsweise ein Verfahren bekannt, das einem Teilnehmer einen sogenannten netzknotenübergreifenden Wechsel - d.h. einem Wechsel von einem einer ersten Kommunikationseinrichtung zugeordneten Kommunikationsendgerät auf ein einer zweiten Kommunikationseinrichtung zugeordnetes, besuchtes Kommunikationsendgerät - zwischen Kommunikationsendgeräten innerhalb eines Kommunikationssystems unter Beibehaltung von individuellen Benutzereinstellungen ermöglicht. Bei einer Anmeldung eines mobilen Teilnehmers an dem der zweiten Kommunikationseinrichtung zugeordneten, besuchten Kommunikationsendgerät werden benutzerindividuelle Konfigurationsdaten von der dem Benutzer als "Heimatnetzknoten" zugeordneten ersten Kommunikationseinrichtung an die zweite Kommunikationseinrichtung übertragen, durch die daraufhin eine Einstellung der Benutzerkonfiguration für den mobilen Teilnehmer anhand der übermittelten Konfigurationsdaten veranlasst wird. Kommunikationsseinrichtungen, denen Kommunikationsendgeräte über eine fest zugeteilte Leitung und eine dem jeweiligen Kommunikationsendgerät fest zugeteilte Anschlusseinheit zugeordnet sind, übernehmen nach Einstellung der Benutzerkonfiguration die Vermittlungs- und Kommunikationssteuerung ohne Mitwirkung des Heimatnetzknotens des mobilen Teilnehmers. Anschaulich hat der mobile Teilnehmer mit einer Registrierung an einem einer anderen Kommunikationseinrichtung zugeordneten Kommunikationsendgerät die Kommunikationseinrichtung "gewechselt", wobei in Hinblick auf seine Teilnehmernummer oder bezüglich seiner Anruferidentifizierung bei ausgehenden Verbindungen keine Änderung eingetreten ist.

Das oben genannten Verfahren basiert also auf einer Übertragung von benutzerindividuellen Konfigurationsdaten von der dieser Konfigurationsdaten speichernde Kommunikationseinrichtung - Heimatnetzknoten - an die dem besuchten Kommunikationsendgerät zugeordnete Kommunikationseinrichtung. Wenngleich mithilfe der benutzerindividuellen Konfigurationsdaten eine weitgehende Individualisierung des besuchten Kommunikationsendgeräts möglich ist, insbesondere beispielsweise in Form einer Zuteilung von persönlichen Berechtigungen des Teilnehmers, seiner persönlichen Gesprächsdatenerfassung und Gesprächsgebührenzuordnung, sind andererseits bestimmte Gruppen- und Teamfunktionen wie z.B. eine in der Fachwelt als "Chef-Sekretär-Konfiguration" bekannte Teamfunktion aufgrund des Wechsels der Kommunikationseinrichtung vom Heimatnetzknoten auf die dem besuchten Kommunikationsendgerät zugeordnete Kommunikationseinrichtung nicht möglich. Damit sind für einen mobilen Teilnehmer wichtige Funktionen und Leistungsmerkmale an fremden besuchten Kommunikationseinrichtungen nicht nutzbar.

Aufgabe der Erfindung ist es, Maßnahmen vorzusehen, mit denen eine Individualisierung eines besuchten Kommunikationsendgeräts sowohl hinsichtlich aller Benutzereinstellungen und benutzerindividuellen Leistungsmerkmalaktivierungen, als auch hinsichtlich aller Gruppen- und Teamfunktionen gewährleistet sind.

Eine Lösung der Aufgabe erfolgt durch ein Verfahren mit den Merkmalen des Patentanspruchs 1.

Erfindungsgemäß ist das besuchte Kommunikationsendgerät über ein paketorientiertes Netzwerk einer ersten Kommunikationseinrichtung anfänglich zugeordnet. Nach einer erfolgten Registrierung des mobilen Teilnehmers am besuchten ersten Kommunikationsendgerät wird das besuchte Kommunikationsendgerät an der ihm anfänglich zugeordneten ersten Kommunikationseinrichtung abgemeldet und einer zweiten Kommunikationseinrichtung zugeordnet. Diese zweite Kommunikationseinrichtung entspricht dem Heimatnetzknoten des mobilen Teilnehmers. Das paketorientierte Netzwerk verbindet dabei alle im Kommunikationssystem angeordneten Kommunikationseinrichtungen. Weiterhin sind alle Kommunikationsendgeräte mit ihrer jeweils zugeordneten Kommunikationseinrichtung über dieses paketorientierte Netzwerk verbunden.

Ein wesentlicher Vorteil des erfindungsgemäßen Verfahrens besteht darin, das ein mobiler Teilnehmer an einem besuchten Kommunikationsendgerät sämtliche Funktionen und Leistungsmerkmalaktivierungen einschließlich aller Gruppen- und Teamfunktionen identisch wie an dem seinem Heimatnetzknoten zugeordnetem Kommunikationsendgerät vorfindet. Dies ergibt sich aus der Abmeldung von der die Registrierung entgegennehmenden ersten Kommunikationseinrichtung und der Zuordnung zu seinem Heimatnetzknoten, der zweiten Kommunikationseinrichtung. Eine - virtuelle - Verbindung in Folge dieser Zuordnung erfolgt dabei über das kommunikationssystemweite paketorientierte Netzwerk.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Fig. 1:: ein Strukturbild zur schematischen Darstellung einer Zuordnung eines mobilen Teilnehmers zu einem besuchten Kommunikationsendgerät; und
- Fig. 2:: ein Strukturbild zur schematischen Darstellung einer Zuordnung des mobilen Teilnehmers zu einem dritten Kommunikationsendgerät.

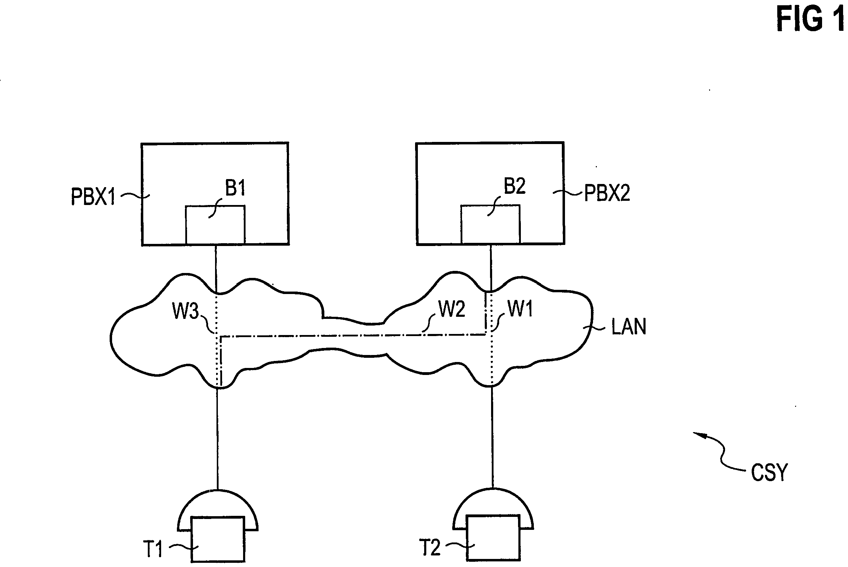

In Fig. 1 ist ein Kommunikationssystem CSY mit einem im gesamten Kommunikationssystem CSY zugreifbaren paketorientierten Netzwerk LAN dargestellt.

An das paketorientierte Netzwerk LAN sind zwei Kommunikationseinrichtungen PBX1, PBX2 sowie zwei Kommunikationsendgeräte T1, T2 angeschlossen. Entsprechend dieser Anschlussweise unterstützen die beiden Kommunikationsendgeräte T1, T2 einen paketorientierten Austausch von Nutz- und/oder Signalisierungsdaten, sind also beispielsweise als VoIP-Kommunikationsendgeräte T1, T2 (Voice over Internet Protocol) ausgestaltet.

Jede der beiden Kommunikationseinrichtungen PBX1, PBX2 enthält eine jeweilige Anschlusseinheit B1, B2. Die Anschlusseinheiten B1, B2 verwalten jeweils so genannte - nicht dargestellte - Heimatanschlüsse, die über administrative Maßnahmen einem jeweiligen Kommunikationsendgerät T1, T2 zugeordnet sind. Der Heimatanschluss entspricht einem logischen Anschluss - in der Fachwelt auch mit "Port" bezeichnet - der Kommunikationsinformationen mit einem dem Teilnehmer gegenwärtig zugeordneten Kommunikationsendgerät austauscht. Weiterhin erfolgt durch den jeweiligen Heimatanschluss ein Austausch von Kommunikationsinformationen mit höheren Protokollebenen bzw. Steuerungseinrichtungen der zugehörigen Kommunikationseinrichtung PBX1, PBX2.

Jedem Heimatanschluss ist eine im paketorientierten Netzwerk LAN eindeutige Identifizierungsnummer zugewiesen. Diese Identifizierungsnummer liegt beispielsweise in Form einer IP-Adresse (Internet Protocol) vor. Entsprechend ist auch allen Kommunikationsendgeräten T1, T2 im Kommunikationssystem CSY jeweils eine individuelle IP-Adresse zugewiesen, durch die eine eindeutige Identifizierung im Kommunikationssystem CSY gewährleistet ist.

Bei der weiteren Beschreibung des Ausführungsbeispiels wird verallgemeinernd meist von einer einem jeweiligen Kommunikationsendgerät T1, T2 "zugeordneten Kommunikationseinrichtung" PBX1, PBX2 gesprochen. Präziser ausgedrückt erfolgt eine Zuordnung eines jeweiligen Heimatanschlusses der jeweiligen Kommunikationseinrichtung PBX1, PBX2 zum jeweils zugeordneten Kommunikationsendgerät T1, T2. In Hinblick auf die Tatsache, dass in der weiteren Darstellung jeweils nur ein, einer jeweiligen Kommunikationseinrichtung PBX1, PBX2 zuzuordnendes Kommunikationsendgerät T1, T2 betrachtet wird, wird aus Übersichtlichkeitsgründen im Weiteren von einer "zugeordneten Kommunikationseinrichtung" gesprochen und lediglich in bestimmten Fällen auf eine Zuordnung zum jeweiligen Heimatanschluss präzisiert.

Das zweite Kommunikationsendgerät T2 ist einem Teilnehmer - im Folgenden als mobiler Teilnehmer bezeichnet - fest zugewiesen, liegt also beispielsweise in Form eines für den mobilen Teilnehmer reservierten Arbeitsplatztelephons T2 vor. Dieses zweite Kommunikationsendgerät T2 ist über das paketorientierte Netzwerk LAN einer zweiten Kommunikationseinrichtung PBX2 - im Folgenden auch als Heimatnetzknoten PBX2 des mobilen Teilnehmers bezeichnet - anfänglich zugeordnet.

Die anfängliche Zuordnung des zweiten Kommunikationsendgeräts T2 zur zweiten Kommunikationseinrichtung PBX2 ist in der Zeichnung mit einem punktiert dargestellten Leitweg W1 versinnbildlicht.

Das erste Kommunikationsendgerät T1 ist anfänglich der ersten Kommunikationseinrichtung PBX1 über das paketorientierte Netzwerk LAN zugeordnet und wird im Folgenden als "besuchtes" Kommunikationsendgerät T1 bezeichnet. Dieses besuchte Kommunikationsendgerät T1 möchte der mobile Teilnehmer unter Anwendung des erfindungsgemäßen Verfahrens als das Seinige individualisieren.

Die anfängliche Zuordnung des ersten Kommunikationsendgeräts T1 zur ersten Kommunikationseinrichtung PBX1 ist in der Zeichnung mit einem punktiert dargestellten Leitweg W3 versinnbildlicht.

Bei der sinnbildlichen Darstellung der Leitwege W1, W3 sowie eines noch zu erläuternden - in der Zeichnung strichpunktiert dargestellten - Leitwegs W2 ist zu beachten, dass diese Leitwege W1, W2, W3 als eine der Anschauung dienende Darstellung möglicher "virtueller" Leitwege W1, W2, W3 in einem - technisch gesehen verbindungslosen - paketorientierten Netzwerk LAN zu verstehen sind. Gegebenenfalls wird auf die Leitwege W1, W2, W3 auch mit dem abstrakteren Begriff "Zuordnung" W1, W2, W3 Bezug genommen.

Zum Zwecke einer Individualisierung des besuchten Kommunikationsendgeräts T1 veranlasst der mobile Teilnehmer eine Anmeldeprozedur, bei der er Anmeldeinformationen am besuchten Kommunikationsendgerät T1 eingibt. Zur Einleitung dieser Anmeldeprozedur gibt der mobile Teilnehmer am besuchten Kommunikationsendgerät T1 beispielsweise eine Kennzahl ein oder aktiviert eine Funktionstaste. Für die Anmeldeprozedur ist eine Eingabe von Anmeldeinformationen erforderlich, die beispielsweise eine Teilnehmernummer und eine persönlichen Identifikationsnummer (PIN) des mobilen Teilnehmers beinhalten. Alternativ dazu identifiziert bzw. autorisiert sich der mobile Teilnehmer am besuchten Kommunikationsendgerät T1 durch eine ihm zugeordnete Chipkarte. Die Anmeldeinformationen werden zwischen dem besuchten Kommunikationsendgerät T1 und der diesem anfänglich zugeordneten Kommunikationseinrichtung PBX1 über das paketorientierte Netzwerk LAN ausgetauscht.

Die Kommunikationsendgeräte T1, T2 sind insbesondere auch, in einer alternativen Ausführungsform, als Applikation auf einem jeweiligen - nicht dargestellten - Rechnersystem zu realisieren. Eine technische Realisierung der Kommunikationsendgeräte T1, T2 auf Rechnersystemen, z.B. Arbeitsplatzrechnern, erfolgt beispielsweise mit einer Implementierung der Applikation CSTA (Computer Supported Telecommunications Application) gemäß Standards des Gremiums ECMA (European Computer Manufacturers Association). Die oben genannte Anmeldeprozedur am besuchten Kommunikationsendgerät T1 erübrigt sich in diesem Fall, da bei Rechnersystemen meist ohnehin eine Anmeldung des Bedieners an einem - nicht dargestellten - Leitrechner erforderlich ist.

Die dem besuchten Kommunikationsendgerät T1 anfänglich zugeordnete Kommunikationseinrichtung PBX1 übermittelt diese Anmeldeinformationen über das paketorientierte Netzwerk LAN an den Heimatnetzknoten PBX2 des mobilen Teilnehmers. Statt eines Austauschs über das paketorientierte Netzwerk LAN ist auch ein Austausch über - nicht dargestellte - die beiden Kommunikationseinrichtungen PBX1, PBX2 verbindende, sogenannte Querleitungen realisierbar. Derlei Querleitungen sind beispielsweise durch festverbundene Daten- und/oder Kommunikationsleitungen zwischen den Kommunikationseinrichtungen PBX1, PBX2 zum Austausch von Kommunikations- und/oder Steuerungsdaten realisierbar.

Nach einer erfolgten Anmeldeprozedur oder auch im Verlauf dieser Anmeldeprozedur sendet die erste Kommunikationseinrichtung PBX1 eine Abfragemeldung in Verbindung mit den Anmeldeinformationen an den Heimatnetzknoten PBX2 des mobilen Teilnehmers. Der Heimatnetzknoten PBX2 überprüft die Anmeldeinformationen, insbesondere die PIN des mobilen Teilnehmers. Ein weiterer optionaler Bestandteil dieser an den Heimatnetzknoten übermittelten Anmeldeinformationen ist die IP-Adresse des besuchten Kommunikationsendgeräts T1. Bei einem positiven Ergebnis der Überprüfung der Anmeldeinformationen meldet der Heimatnetzknoten PBX2 Angaben zur IP-Adresse des Heimatanschlusses des mobilen Teilnehmers an die erste Kommunikationseinrichtung PBX1. Bei Bedarf wird mit der Angabe der IP-Adresse des Heimatanschlusses auch ein Passwort übermittelt, das gegebenenfalls für eine Einrichtung des Leistungsmerkmals "mobiler Teilnehmer" erforderlich ist.

Die erste Kommunikationseinrichtung PBX1 leitet sodann die IP-Adresse des Heimatanschlusses ("Besuchsadresse") sowie gegebenenfalls das zugeordnete Passwort an das besuchte Kommunikationsendgerät T1 weiter. Das besuchte Kommunikationsendgerät T1 speichert diese Besuchsadresse zusammen mit der IP-Adresse ("Heimatadresse") des Heimatanschlusses der dem besuchten Kommunikationsendgerät T1 anfänglich zugeordneten Kommunikationseinrichtung PBX2.

Anschließend wird die Zuordnung W3 der ersten Kommunikationseinrichtung PBX1 zum besuchten Kommunikationsendgerät T1 deaktiviert. Diese Deaktivierung wird entweder durch das besuchte Kommunikationsendgerät T1 angefordert, oder, in einer alternativen Ausführungsform, durch die erste Kommunikationseinrichtung PBX1 selber.

In einem folgenden Verfahrensschritt sendet das besuchte Kommunikationsendgerät T1 eine Anmeldeanforderung zum Heimatnetzknoten PBX2 des mobilen Teilnehmers. Diese Anmeldeanforderung wird in der Fachwelt auch als "Logon Request" bezeichnet. Der Heimatnetzknoten PBX2 sendet nach Erhalt der Anmeldeanforderung zuerst eine Abmeldeanforderung - in der Fachwelt auch als "Logoff Request" bezeichnet - zu der ihm bislang über den Leitweg W1 zugeordneten Kommunikationseinrichtung T2 und quittiert die Anmeldeanforderung des besuchten Kommunikationsendgeräts T1 nach einer Abmeldung des Kommunikationsendgeräts T2 mit einer Anmelde-Bestätigungsmeldung ("Logon-Acknowledge").

Das besuchte Kommunikationsendgerät T1 ist jetzt auf den mobilen Teilnehmer registriert und über den Leitweg W2 dem Heimatnetzknoten PBX2 des mobilen Teilnehmers zugeordnet. Infolge dieser Zuordnung W2 sind sämtliche Funktionen und Leistungsmerkmalaktivierungen einschließlich aller Gruppen- und Teamfunktionen identisch mit denen seines ihm anfänglich zugeordneten, jetzt abgemeldeten, Kommunikationsendgerät T2. Anschaulich ist eine "Umkopplung" der Zuordnung W3 des besuchten Kommunikationsendgeräts T1 von der ersten Kommunikationseinrichtung PBX1 auf eine Zuordnung W2 zum Heimatnetzknoten PBX2 des mobilen Teilnehmers erfolgt. Diese "Umkopplung" erfolgt auf Basis der IP-Adresse - Besuchsadresse - des besuchten Kommunikationsendgeräts T1, an dem sich der mobile Teilnehmer autorisiert hat. Der Heimatnetzknoten PBX2 des mobilen Teilnehmers speichert diese Besuchsadresse zusammen mit der Basisadresse des dem mobilen Teilnehmer anfänglich zugeordneten Kommunikationsendgeräts T2.

Das jetzt abgemeldete, d.h. nicht mehr dem Heimatnetzknoten PBX2 zugeordnete Kommunikationsendgerät T2 sendet periodisch eine Anmeldeanforderung an den Heimatnetzknoten PBX2. Diese Anmeldeanforderung wird vom Heimatnetzknoten PBX2 solange ignoriert, bis sich der mobile Teilnehmer am besuchten Kommunikationsendgerät T1 wieder abgemeldet hat oder bis eine Abmeldung des besuchten Kommunikationsendgeräts T1 aufgrund anderer Zustandsänderungen erfolgt ist. Derartige Zustandsänderungen können beispielsweise im Zuge von administrativen Maßnahmen oder in Folge einer Überschreitung von vorgegebenen Zeitgrenzen für die Benutzungsdauer des besuchten Kommunikationsendgeräts T1 eintreten.

Bei einer Abmeldung des mobilen Teilnehmers bzw. Deaktivierung am besuchten Kommunikationsendgerät T1 wird das anfänglich dem mobilen Teilnehmer zugeordnete Kommunikationsendgerät T2 mit einem Eintreffen der vorgenannten, in periodischen Zeitabständen an den Heimatnetzknoten PBX2 gesendeten Anmeldeanforderung automatisch wieder aktiviert, d.h. dem mobilen Teilnehmer wieder zugeordnet.

Ankommende Anrufe an die Basis-Rufnummer des besuchten Kommunikationsendgeräts T1 - d.h. die dem besuchten Kommunikationsendgerät T1 vor der Anmeldung des mobilen Teilnehmers zugeordnete Teilnehmernummer - werden in dem Zustand, in dem ein mobiler Teilnehmer angemeldet ist, beispielsweise zu einem Rufziel umgeleitet, welches in Konfigurationsdaten des besuchten Kommunikationsendgeräts T1 als Anrufumleitungsziel eingetragen ist. Derartige Konfigurationsdaten sind beispielsweise in der dem besuchten Kommunikationsendgerät anfänglich zugeordneten Kommunikationseinrichtung PBX1 gespeichert.

In einer alternativen Ausführungsform ist es nicht notwendig, dass der Heimatanschluss des mobilen Teilnehmers mit einem Kommunikationsendgerät T2 beschaltet ist. Der mobile Teilnehmer verfügt in diesem Fall also über kein ihm festzugeordnetes "Heimattelefon". Für diesen Fall muss jedoch in gleicher Weise ein Heimatanschluss in der Anschlusseinheit B2 des Heimatnetzknotens PBX2 beschaltet sein und der mobile Teilnehmer mit entsprechenden Teilnehmerdaten konfiguriert sein.

Im Zuge einer sogenannten Wiederinbetriebnahme kann der mobile Teilnehmer eine Aktivierung des ihm anfänglich zugeordneten Kommunikationsendgeräts T2 durch einen Anmeldeprozess an diesem Kommunikationsendgerät T2 wieder herbeiführen. Diese Wiederinbetriebnahme geht in analoger Weise zu dem oben beschriebenen Verfahren einher mit einer Deaktivierung der Zuordnung des besuchten Kommunikationsendgeräts T1.

Im Folgenden wird unter weiterer Bezugnahme auf die Funktionseinheiten der Fig. 1 ein Wechsel des mobilen Teilnehmers näher auf ein weiteres Kommunikationsendgerät erläutert.

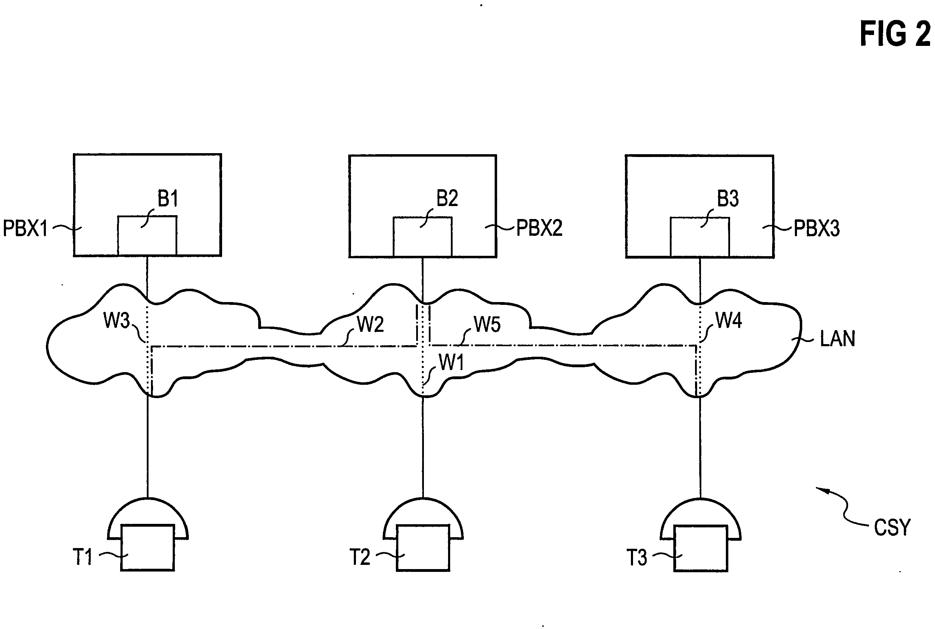

In Fig. 2 ist eine gegenüber der Fig. 1 erweiterte Ausführungsform dargestellt, wobei von einer detaillierten Beschreibung einzelner Funktionskomponenten abgesehen wird, soweit diese bereits für ähnliche oder identische Funktionskomponenten der Fig. 1 erfolgt ist.

In Fig. 2 ist eine weitere, dritte Kommunikationseinrichtung PBX3 des Kommunikationssystems CSY dargestellt, der über das paketorientierte Netzwerk LAN ein drittes Kommunikationsendgerät T3 über den Leitweg W4 anfänglich zugeordnet ist.

Im Folgenden wird zunächst davon ausgegangen, dass der mobile Teilnehmer weiterhin am ersten Kommunikationsendgerät T1 registriert ist, das erste Kommunikationsendgerät T1 folglich über den Leitweg W2 der zweiten Kommunikationseinrichtung PBX2 - Heimatnetzknoten des mobilen Teilnehmers- zugeordnet ist.

Der mobile Teilnehmer melde sich im Folgenden am dritten Kommunikationsendgerät T3 an. Die Anmeldung am dritten Kommunikationsendgerät T3 erfolgt hinsichtlich der Anmeldeprozedur analog zu der Anmeldung am vormals besuchten zweiten Kommunikationsendgerät T2. Das dritte Kommunikationsendgerät T3 wird im Folgenden als "besuchtes" Kommunikationsendgerät T3 bezeichnet.

Die vom mobilen Teilnehmer mit der Anmeldeprozedur eingegebenen Anmeldeinformationen werden zwischen dem besuchten Kommunikationsendgerät T3 und der dieser anfänglich zugeordneten Kommunikationseinrichtung PBX3 über das paketorientierte Netzwerk LAN ausgetauscht. Wie bereits analog für die Zuordnung des ersten Kommunikationsendgeräts T1 dargestellt, erfolgt im Zuge der Anmeldeprozedur eine Abfragemeldung der dritten Kommunikationseinrichtung PBX3 an den Heimatnetzknoten PBX2 des mobilen Teilnehmers, der u.a. die eingegebene PIN prüft. Bei positivem Ergebnis dieser Überprüfung erfolgt daraufhin eine Übermittlung der IP-Adresse des Heimatnetzknotens PBX1 sowie eine Übermittlung des für die Einrichtung des Leistungsmerkmals "mobiler Teilnehmer" eventuell erforderlichen Passworts an die dritte Kommunikationseinrichtung PBX3.

Ebenso analog zum obigen Vorgehen erfolgt eine Deaktivierung der anfänglichen Zuordnung des dritten Kommunikationsendgeräts T3 zu der dritten Kommunikationseinrichtung PBX3, in der Zeichnung durch einen Leitweg W4 dargestellt.

Die Zuordnung W2 des - vormals besuchten - ersten Kommunikationsendgeräts T1 zum Heimatnetzknoten PBX2 des mobilen Teilnehmers wird daraufhin gelöst und durch die Zuordnung W4 des jetzt besuchten Kommunikationsendgeräts T3 zum Heimatnetzknoten PBX2 ersetzt.

Zur Ausführung der Zuordnung des besuchten Kommunikationsendgeräts T3 zum Heimatnetzknoten PBX2 des mobilen Teilnehmers sendet das besuchte Kommunikationsendgerät T3 mit dem Erhalt der IP-Adresse des Heimatnetzknoten PBX2 des mobilen Teilnehmers eine Anmeldeanforderung zu diesem Heimatnetzknoten PBX2. Der Heimatnetzknoten PBX2 sendet nach Erhalt der Anmeldeanforderung des besuchten Kommunikationsendgeräts T3 zuerst eine Abmeldeanforderung zu dem ihm bislang zugeordneten - dem vormals besuchten - Kommunikationsendgerät T1 und quittiert die Anmeldeanforderung des besuchten Kommunikationsendgeräts T3 nach einer Abmeldung des Kommunikationsendgeräts T1 mit einer Anmeldebestätigungsmeldung.

Das Verfahren zur Zuordnung des besuchten Kommunikationsendgeräts T3 an den Heimatnetzknoten PBX2 erfolgt bisher weitgehend analog zu der Anmeldung des vormals besuchten ersten Kommunikationsendgeräts T1 an den Heimatnetzknoten PBX2. Im weiteren wird ein Verfahrensschritt erläutert, durch den die erneute Zuordnung W3 des vormals besuchten Kommunikationsendgeräts T1 zu der diesem anfänglich zugeordneten Kommunikationseinrichtung PBX1 erfolgt. Nachdem das vormals besuchte Kommunikationsendgerät T1 eine Abmeldeanforderung erhalten hat, sendet es eine Anmeldeanforderung zu der ihm anfänglich zugeordneten Kommunikationseinrichtung PBX1. Die anfänglich zugeordnete Kommunikationseinrichtung PBX1 des ersten Kommunikationsendgeräts T1 entspricht dessen Heimatnetzknoten PBX1, der in der Fachwelt auch als Heimatanschluss bzw. Basisanschluss bezeichnet wird.

Infolge dieser Anmeldeanforderung des vormals besuchten Kommunikationsendgeräts T1 an die ihm anfänglich zugeordnete Kommunikationseinrichtung PBX1 erfolgt eine Zuordnung dieses Kommunikationsendgeräts T1 an die Kommunikationseinrichtung PBX1 über den Leitweg W3. Das vormals besuchte Kommunikationsendgerät T1 wird somit wieder aktiviert. Mit der erneuten Aktivierung des vormals besuchten Kommunikationsendgeräts T1 ist dieses Kommunikationsendgerät T1 für beliebige andere mobile Teilnehmer wieder nutzbar.

Die erneute Zuordnung des vormals besuchten Kommunikationsendgeräts T1 zu der ersten Kommunikationseinrichtung PBX1 wird ausgelöst durch periodisch an die erste Kommunikationseinrichtung PBX1 übermittelte Anmeldeanforderungen. Diese Anmeldeanforderungen werden immer an den dem jeweiligen Kommunikationsendgerät T1, T2, T3 zugeordnetem Heimatnetzknoten PBX1, PBX2, PBX3, in diesem Fall an die erste Kommunikationseinrichtung PBX1, gesendet. Derartige periodisch übermittelte Anmeldeanforderungen werden von dem jeweiligen Kommunikationsendgerät T1 zugeordneten Heimatnetzknoten PBX1 solange ignoriert, bis sich der mobile Teilnehmer am jeweiligen Kommunikationsendgerät abgemeldet hat. Bei einer Deaktivierung des Leistungsmerkmals "mobiler Teilnehmer" am besuchten Kommunikationsendgerät wird also dieses Kommunikationsendgerät T1 mit der periodisch ausgesandten Anmeldeanforderung an seinem zugehörigen Heimatnetzknoten automatisch wieder aktiviert.

Im Folgenden wird ein Verfahren beschrieben, das einem mobilen Teilnehmer ermöglicht, von dem besuchten Kommunikationsendgerät T3 auf das ihm ursprünglich zugeordnete Kommunikationsendgerät T2 zu wechseln, ohne sich vorher am besuchten Kommunikationsendgerät T3 abzumelden. Dieser Vorgang wird auch als "Reaktivierung" bezeichnet. Dazu kehrt der am besuchten Kommunikationsendgerät T3 registrierte mobiler Teilnehmer ohne Veranlassung einer Deaktivierung des Leistungsmerkmals "mobiler Teilnehmer" an sein ihm ursprünglich zugeordnetes Kommunikationsendgerät T2 zurück und meldet sich an diesem an. Die unten näher erläuterte erneute Zuordnung W1 des Kommunikationsendgeräts T2 zu dessen Heimatnetzknoten PBX2 entspricht einer "Wiederinbetriebnahme" des dem mobilen Teilnehmer ursprünglich zugeordneten Kommunikationsendgeräts T2. Mit dieser Wiederinbetriebnahme geht eine Deaktivierung des besuchten Kommunikationsendgeräts T3 einher.

Der mobile Teilnehmer führt hierzu an seinem Kommunikationsendgerät T2 eine analog zur oben beschriebenen erfolgende Anmeldeprozedur durch. Der Heimatnetzknoten PBX2 des mobilen Teilnehmers sendet daraufhin eine Abmeldeanforderung an das bislang besuchte Kommunikationsendgerät T3. Das besuchte Kommunikationsendgerät T3 quittiert diese Abmeldeanforderung, worauf ein Lösen der Zuordnung W5 des dritten Kommunikationsendgeräts T3 zum Heimatnetzknoten PBX2 des mobilen Teilnehmers erfolgt. Nach diesem Lösen der Zuordnung W5 erfolgt - in analoger Weise wie oben beschrieben - eine in periodischen Zeitabständen erfolgende Übermittlung von Anmeldeanforderungen des Kommunikationsendgeräts T3 an dessen Heimatnetzknoten PBX3. Die erste der nach dem Lösen der Zuordnung W5 an der dritten Kommunikationseinrichtung PBX3 eintreffende Anmeldeanforderungen wird von dieser mit einer an das dritte Kommunikationsendgerät T3 gesandten Anmeldebestätigung quittiert, worauf dieses über den Leitweg W4 wieder der dritten Kommunikationseinrichtung PBX3 zugeordnet ist. Damit ist das vormals vom mobilen Teilnehmer besuchte Kommunikationsendgerät T3 wieder als besuchbares Kommunikationsendgerät T3 für andere mobile Teilnehmer verwendbar.

Der Heimatnetzknoten PBX2 des mobilen Teilnehmers aktiviert in entsprechender Weise nach Eingang einer der seit Deaktivierung des Kommunikationsendgeräts T2 in periodischen Zeitabständen übersandten Anmeldeanforderungen des Kommunikationsendgeräts T2 eine Wiederinbetriebnahme zu dem dem Kommunikationsendgerät T2 zugeordneten Heimatnetzknoten PBX2.

Im Folgenden wird eine weitere Ausgestaltung des erfindungsgemäßen Verfahrens beschrieben, bei dem eine Deaktivierung des besuchten Kommunikationsendgeräts T3 durch den mobilen Teilnehmer erfolgt. Hierzu veranlasst der mobile Teilnehmer am besuchten Kommunikationsendgerät T3 eine Abmeldeprozedur. Zur Einleitung dieser Abmeldeprozedur gibt der mobile Teilnehmer am besuchten Kommunikationsendgerät T3 beispielsweise eine Kennzahl ein oder aktiviert eine Funktionstaste. Für diese Abmeldeprozedur ist optional eine Eingabe von Abmeldeinformationen erforderlich, die beispielsweise eine Teilnehmernummer und eine persönliche Identifikationsnummer (PIN) des mobilen Teilnehmers umfassen. Alternativ dazu identifiziert bzw. autorisiert sich der mobile Teilnehmer - analog zur Anmeldeprozedur - durch eine Chipkarte. Der Heimatnetzknoten PBX2 des mobilen Teilnehmers sendet daraufhin eine Abmeldeanforderung zum besuchten Kommunikationsendgerät T3, die vom besuchten Kommunikationsendgerät T3 quittiert wird. Die Zuordnung des besuchten Kommunikationsendgeräts T3 zum Heimatnetzknoten PBX2 des mobilen Teilnehmers über den Leitweg W4 wird daraufhin gelöst. Mithilfe des oben genannten Verfahrens einer periodischen Aussendung einer Anmeldeanforderung erfolgt eine Wiederinbetriebnahme, d.h. eine Zuordnung W4 des dritten Kommunikationsendgeräts T3 zu der ihm anfänglich zugeordneten Kommunikationseinrichtung PBX3. Damit ist das vormals vom mobilen Teilnehmer besuchte Kommunikationsendgerät T3 wieder als besuchbares Kommunikationsendgerät T3 für andere mobile Teilnehmer verwendbar.

Im Folgenden wird eine weitere Ausgestaltung des erfindungsgemäßen Verfahrens beschrieben, bei der durch Zeitvorgabe oder durch administrative Maßnahmen eine Deaktivierung des besuchten Kommunikationsendgeräts T3 zum Heimatnetzknoten PBX2 des mobilen Teilnehmers erfolgt. Durch einen Zeitvorgabeparameter im Heimatnetzknoten PBX2 des mobilen Teilnehmers kann beispielsweise festgelegt werden, über welchen Zeitraum eine Zuordnung des mobilen Teilnehmers zu einem besuchten Kommunikationsendgerät T3 zulässig ist. Diese Zeitvorgabe kann abhängig davon sein, ob das besuchte Kommunikationsendgerät T3 ein so genanntes "Shared Desk"-Kommunikationsendgerät T3, d.h. ein für eine temporäre Nutzung vorgesehenes Kommunikationsendgerät T3 ist, oder ein Kommunikationsendgerät T3, das einem Teilnehmer fest zugeordnet ist.

Der Heimatnetzknoten PBX2 des mobilen Teilnehmers sendet hierzu eine Abmeldeanforderung zum besuchten Kommunikationsendgerät T3. Das besuchte Kommunikationsendgerät T3 quittiert diese Abmeldeanforderung und aktiviert daraufhin eine Wiederinbetriebnahme zur Kommunikationseinrichtung PBX3. Damit ist das vormals besuchte Kommunikationsendgerät T3 wieder als besuchbares Shared Desk-Kommunikationsendgerät T3 für andere Teilnehmer benutzbar.

## Patentansprüche

1. Verfahren zur Unterstützung einer kommunikationssystemweiten Mobilität eines Teilnehmers in einem Kommunikationssystem (CSY) mit
- einem einer ersten Kommunikationseinrichtung (PBX1) zugeordneten Kommunikationsendgerät (T1), wobei der Teilnehmer im Rahmen einer Anmeldeprozedur durch Eingabe einer teilnehmerindividuellen Anmeldeinformation am Kommunikationsendgerät (T1) an der ersten Kommunikationseinrichtung (PBX1) registriert wird,
- einer zweiten Kommunikationseinrichtung (PBX2), die zur Bereitstellung von spezifischen Konfigurationsdaten des Teilnehmers eingerichtet ist,
und
- einem paketorientierten Netzwerk (LAN), über welches das Kommunikationsendgerät (T1) mit der ersten (PBX1) und der zweiten Kommunikationseinrichtung (PBX2) verbunden ist,
wobei nach einer erfolgten Registrierung des Teilnehmers an der ersten Kommunikationseinrichtung (PBX1) das Kommunikationsendgerät (T1) von der ersten Kommunikationseinrichtung (PBX1) abgemeldet und anstelle der ersten Kommunikationseinrichtung (PBX1) der zweiten Kommunikationseinrichtung (PBX2) zugeordnet wird.

2. Verfahren nach Anspruch 1,
**dadurch gekennzeichnet,**
**dass** die erste und die zweite Kommunikationseinrichtung (PBX1, PBX2) jeweils Anschlusseinheiten (B1, B2) mit mehreren Heimatanschlüssen enthalten, die jeweils mit einer im paketorientierten Netzwerk (LAN) eindeutigen Identifizierungsnummer versehen sind.

3. Verfahren nach einem der Ansprüche 1 bis 2,
**dadurch gekennzeichnet,**
**dass** das Kommunikationsendgerät (T1) mit einer im paketorientierten Netzwerk LAN eindeutigen Identifizierungsnummer versehen ist.

4. Verfahren nach einem der Ansprüche 2 oder 3,
**dadurch gekennzeichnet,**
**dass** jedem Heimatanschluss ein jeweiliges Kommunikationsendgerät (T1, T2) eindeutig zuordenbar ist.

5. Verfahren nach einem der vorhergehenden Ansprüche,
**dadurch gekennzeichnet,**
**dass** das Kommunikationsendgerät (T1) die Anmeldeinformation mit der ersten Kommunikationseinrichtung (PBX1) austauscht.

6. Verfahren nach Anspruch 5,
**dadurch gekennzeichnet,**
**dass** die erste Kommunikationseinrichtung (PBX1) die Anmeldeinformation mit der zweiten Kommunikationseinrichtung (PBX2) austauscht.

7. Verfahren nach Anspruch 6,
**dadurch gekennzeichnet,**
**dass** an das Kommunikationsendgerät (T1) eine den zuzuordnenden Heimatanschluss der zweiten Kommunikationseinrichtung (PBX2) identifizierende Identifizierungsnummer übermittelt wird.

8. Verfahren nach Anspruch 7,
**dadurch gekennzeichnet,**
**dass** mit der Übermittlung der Identifizierungsnummer des zuzuordnenden Heimatanschlusses dessen Zuordnung zu einem dem Teilnehmer zugeordneten zweiten Kommunikationsendgerät (T2) gelöst wird.

9. Verfahren nach Anspruch 8,
**dadurch gekennzeichnet,**
**dass** nach dem Lösen der Zuordnung das zweite Kommunikationsendgerät (T2) in periodischen Zeitabständen eine Anmeldeanforderung an die zweite Kommunikationseinrichtung (PBX2) sendet.

10. Verfahren nach Anspruch 9,
**dadurch gekennzeichnet,**
**dass** die in periodischen Zeitabständen gesendeten Anmeldeanforderungen von der zweiten Kommunikationseinrichtung (PBX2) ignoriert werden, solange eine Registrierung des Teilnehmers am ersten Kommunikationsendgerät (T1) vorliegt.

11. Verfahren nach einem der Ansprüche 8 bis 10,
**dadurch gekennzeichnet,**
**dass** die zweite Kommunikationseinrichtung (PBX2) die Identifizierungsnummern des ersten und zweiten Kommunikationsendgeräts (T1; T2) speichert.

12. Verfahren nach einem der Ansprüche 2 bis 11,
**dadurch gekennzeichnet,**
**dass** die Identifizierungsnummer in Form einer IP-Adresse vorliegt.

## Claims

1. Method for supporting the mobility of a subscriber across a communication system (CSY) comprising
- a communication terminal (T1) which is associated with a first communication device (PBX1), wherein the subscriber is registered at the first communication device (PBX1) as part of a log-on procedure by inputting subscriber-specific log-on information at the communication terminal (T1),
- a second communication device (PBX2) which is designed to provide specific configuration data of the subscriber,
and
- a packet-oriented network (LAN), by which means the communication terminal (T1) is connected to the first (PBX1) and the second communication device (PBX2),
wherein, once registration of the subscriber at the first communication device (PBX1) has taken place, the communication terminal (T1) is logged off from the first communication device (PBX1) and is associated with the second communication device (PBX2) instead of the first communication device (PBX1).

2. Method according to claim 1, **characterised in that** the first and the second communication device (PBX1, PBX2) each contain connection units (B1, B2) having a plurality of home connections which are each provided with an identification number that is unique in the packet-oriented network (LAN).

3. Method according to claim 1 or 2, **characterised in that** the communication terminal (T1) is provided with an identification number that is unique in the packet-oriented network LAN.

4. Method according to claim 2 or 3, **characterised in that** a respective communication terminal (T1, T2) can be uniquely associated with each home connection.

5. Method according to any one of the preceding claims, **characterised in that** the communication terminal (T1) exchanges the log-on information with the first communication device (PBX1).

6. Method according to claim 5, **characterised in that** the first communication device (PBX1) exchanges the log-on information with the second communication device (PBX2).

7. Method according to claim 6, **characterised in that** an identification number which identifies the home connection with which the second communication device (PBX2) is to be associated is communicated to the communication terminal (T1).

8. Method according to claim 7, **characterised in that**, with the communication of the identification number of the associated home connection, the association thereof with a second communication terminal (T2) associated with the subscriber is cancelled.

9. Method according to claim 8, **characterised in that**, once the association has been cancelled, the second communication terminal (T2) transmits a log-on request to the second communication device (PBX2) at periodic time intervals.

10. Method according to claim 9, **characterised in that** the log-on requests transmitted at periodic time intervals are ignored by the second communication device (PBX2) for as long as the subscriber is registered at the first communication terminal (T1).

11. Method according to any one of claims 8 to 10, **characterised in that** the second communication device (PBX2) stores the identification numbers of the first and second communication terminal (T1; T2).

12. Method according to any one of claims 2 to 11, **characterised in that** the identification number is in the form of an IP address.

## Revendications

1. Procédé de support d'une mobilité d'un abonné à travers un système de communication dans un système de communication (CSY) comportant
- un terminal de communication (T1) associé à un premier dispositif de communication (PBX1), sachant que l'abonné est inscrit au niveau du terminal de communication (T1) au niveau du premier dispositif de communication (PBX1) dans le cadre d'une procédure d'accès grâce à la saisie d'une information de connexion propre à l'abonné,
- un deuxième dispositif de communication (PBX2) qui est installé pour mettre à disposition des données de configuration spécifiques de l'abonné,
et
- un réseau (LAN) orienté paquets, par l'intermédiaire duquel le terminal de communication (T1) est relié au premier dispositif de communication (PBX1) et au deuxième dispositif de communication (PBX2),
sachant qu'après l'inscription réussie de l'abonné au niveau du premier dispositif de communication (PBX1), le terminal de communication (T1) se déconnecte du premier dispositif de communication (PBX1) et est attribué non pas au premier dispositif de communication (PBX1) mais au deuxième dispositif de communication (PBX2).

2. Procédé selon la revendication 1,
**caractérisé en ce**
**que** les premier et deuxième dispositifs de communication (PBX1, PBX2) contiennent respectivement des unités de connexion (B1, B2) dotées de plusieurs connectiques domestiques, qui sont pourvues respectivement d'un numéro d'identification univoque dans le réseau (LAN) orienté paquets.

3. Procédé selon l'une quelconque des revendications 1 à 2,
**caractérisé en ce**
**que** le terminal de communication (T1) est pourvu d'un numéro d'identification univoque dans le réseau (LAN) orienté paquets.

4. Procédé selon l'une quelconque des revendications 2 ou 3,
**caractérisé en ce**
**que** chaque terminal de communication (T1, T2) peut être attribué de manière univoque respectivement à une connectique domestique.

5. Procédé selon l'une quelconque des revendications précédentes,
**caractérisé en ce**
**que** le terminal de communication (T1) échange l'information relative à la connexion avec le premier dispositif de communication (PBX1).

6. Procédé selon la revendication 5,
**caractérisé en ce**
**que** le premier dispositif de communication (PBX1) échange l'information relative à la connexion avec le deuxième dispositif de communication (PBX2).

7. Procédé selon la revendication 6,
**caractérisé en ce**
**qu'**un numéro d'identification identifiant la connectique domestique à attribuer du deuxième dispositif de communication (PBX2) est transmis au terminal de communication (T1).

8. Procédé selon la revendication 7,
**caractérisé en ce**
**que** la transmission du numéro d'identification de la connectique domestique à attribuer permet d'annuler l'attribution de cette dernière à un deuxième terminal de communication (T2) associé à l'abonné.

9. Procédé selon la revendication 8,
**caractérisé en ce**
**qu'**après l'annulation de l'attribution, le deuxième terminal de communication (T2) envoie à des intervalles de temps périodiques une demande de connexion au deuxième dispositif de communication (PBX2).

10. Procédé selon la revendication 9,
**caractérisé en ce**
**que** les demandes de connexion envoyées à des intervalles de temps périodiques sont ignorées par le deuxième dispositif de communication (PBX2) tant qu'une inscription de l'abonné au niveau du premier terminal de communication (T1) est toujours d'actualité.

11. Procédé selon l'une quelconque des revendications 8 à 10,
**caractérisé en ce**
**que** le deuxième dispositif de communication (PBX2) mémorise les numéros d'identification du premier et du deuxième terminal de communication (T1 ; T2).

12. Procédé selon l'une quelconque des revendications 2 à 11,
**caractérisé en ce**
**que** le numéro d'identification se présente sous la forme d'une adresse IP.
